# EUROPÄISCHE PATENTSCHRIFT

(11) **EP 2 886 638 B1**
(45) Veröffentlichungstag und Bekanntmachung des Hinweises auf die Patenterteilung: **26.02.2020**
(21) Anmeldenummer: 14180168.8
(22) Anmeldetag: 07.08.2014
(51) Int. Cl.: C12H 1/07, B67C 3/02, C12C 7/00, G06Q 10/06, G06Q 10/08, C12C 13/00, C12H 1/056

(54) **Verfahren zur Produktion eines Produktes in einer Brauereianlage**
Method for producing a product in a brewery plant
Procédé de production d'un produit dans une installation brassicole

(30) Priorität: 30.10.2013 DE 102013222054
(43) Veröffentlichungstag der Anmeldung: 24.06.2015
(73) Patentinhaber: GEA BREWERY SYSTEMS GMBH, 97318 Kitzingen (DE)
(72) Erfinder: Michel, Rudolf, 97318 Kitzingen (DE); Bahns, Patrick, 97318 Kitzingen (DE); Ziegler, Georg, 97318 Kitzingen (DE)
(74) Vertreter: Mader, Joachim

(56) Entgegenhaltungen:
- EP-A2- 0 087 139
- WO-A1-2008/020760
- DE-C1- 19 514 034
- US-A- 5 718 161
- US-A1- 2003 177 910
- US-A1- 2011 274 785
- US-A1- 2013 220 133

## Beschreibung

### 1. Gebiet der Erfindung

Die vorliegende Erfindung betrifft ein Verfahren zur Produktion in einer Brauereianlage, insbesondere ein Verfahren zur Bierherstellung.

### 2. Stand der Technik

Die Produkt- bzw. Bierherstellung in einer Brauereianlage ist in der Regel absatzweise getaktet. Man spricht hier von einem Batchbetrieb. Die Prozesse im Sudhaus und im Gär- und Lagerkeller benötigen aufgrund der angewandten Rezepte eine definierte Zeitspanne, die die Gesamtproduktionszeit maßgeblich bestimmt. Hinzu kommt eine gewisse Zeitdauer für das Filtern und Abfüllen des Bieres. Diese Zeitspanne zwischen Produktion der Bierwürze im Sudhaus und dem Abfüllen des fertigen Bieres liegt, je nach Verfahren, zwischen 7 Tagen und 6 Wochen. Aufgrund dieser langen Produktionszeiten ist es nicht möglich, sofort auf eine Bedarfsnachfrage des Marktes zu reagieren.

Daher hält eine Brauerei nach dem Stand der Technik in einem Lagerkeller und einem Drucktankkeller aufgrund historischer Erfahrungen bestimmte Mengen der produzierten Biersorten vor. Aufgrund dieser historischen Daten wird manuell das Wochenprogramm des Sudhauses generiert und die gewünschte Produktionsabfolge durch die einzelnen Prozessschritte durchgeschoben.
Aufgrund dieser Vorgehensweise kann der Fall eintreten, dass zu bestimmten Zeitpunkten bestimmte Produkte nicht abgefüllt und geliefert werden können, da diese nicht zur Verfügung stehen.

Die Druckschrift WO 2008/020760 A1 betrifft ein Verfahren zum Brauen und Servieren von Bier, wobei die Fermentation bei einem selbst erzeugten Druck von einem Fermentationsprozess stattfindet, wobei der Druck auf ungefähr 1,8 Bar und eine Temperatur auf unter 30 °C geregelt wird, damit das Bier einen Teil seiner eigenen CO₂-Produktion beibehält/akzeptiert, sodass das Bier einen höheren CO₂-Gehalt im Vergleich zu einem normalen obergärigen Fermentationsprozesses aufweist. Das Brauen und Servieren kann mittels der nachstehend beschriebenen Vorrichtung durchgeführt werden. Die Vorrichtung zum Brauen und Servieren von Bier umfasst einen einzelnen geschlossenen Behälter, eine Auslasseinheit mit einem Schwimmkörper und einem Gewicht, um sicherzustellen, dass Flüssigkeit durch eine Zapfanlage ausgelassen werden kann.

Es ist daher wünschenswert ein Verfahren und eine Vorrichtung zur Produktion in einer Brauereianlage bereitzustellen, welches derartige Engpässe verhindert und eine "just-in-time" Produktion eines Lebensmittels, z.B. Bier, erlaubt.

### 3. Zusammenfassung der Erfindung

Die oben genannte Aufgabe wird gelöst durch ein Verfahren nach Anspruch 1. Weiterhin werden Ausführungsformen beschrieben, die nicht notwendigerweise unter den Schutzbereich der Patentansprüche fallen, aber für das Verständnis der Erfindung hilfreich sind.

Insbesondere wird diese Aufgabe gelöst durch ein Verfahren zur Produktion eines Produktes in einer Brauereianlage aufweisend eine Abfüllung, einen Lagerkeller und ein Sudhaus, wobei das Verfahren die folgenden Schritte aufweist:
a. Erstellen eines Abfüllauftrages für die Abfüllung;
b. Filtrieren und Abfüllen einer Menge eines Produktes anhand des Abfüllauftrages, wenn die erforderliche Menge als freigegebenes Produkt im Lagerkeller vorhanden ist;
c. Überprüfen der Füllmenge eines Produktes im Lagerkeller und Erstellen eines Sudauftrags für das Sudhaus, wenn die Füllmenge des Produktes eine Mindestfüllmenge unterschreitet;
d. Erzeugen einer Menge eines Vorproduktes im Sudhaus anhand des Sudauftrages.

Zur Verbesserung der Verfügbarkeit entsprechenden Produktes wird ein Verfahren vorgeschlagen, das die Produktionsplanung mit dem Bedarf der Abfülllinie verknüpft und aus dieser Verknüpfung letztendlich den Wochenplan für das Sudhaus generiert. Durch Überwachung des tatsächlichen Bestands von Produkt oder Vorproduktes einer Produktionsstufe wird automatisch ein Fertigungsauftrag für eine vorgelagerte Produktionsstufe erzeugt. Damit passt sich die Produktion in der Brauereianlage in jeder Produktionsstufe automatisch dem jeweiligen Bedarf an ohne, dass auf historische Daten zurückgegriffen werden muss. Weiterhin wird der Lagerbedarf minimiert und eine "just-in-time"-Produktion ermöglicht. Diese erlaubt es sehr kurzfristig auf eine wechselnde Nachfrage nach bestimmten Produkten zu reagieren. Aufgrund der teilweise sehr langen Produktionszeiten einzelner Produktionsstufen in einer Brauereianlage von teilweise mehreren Wochen, und die dazwischen durchzuführenden mikrobiologischen Untersuchungen zur Qualitätssicherung des Bieres wurde ein solches Produktionsverfahren bislang nicht in Betracht gezogen. Die vorliegende Erfindung überwindet jedoch dieses Vorurteil durch eine just-in-time Produktion die durch Produktionsaufträge der jeweils nachgelagerten Produktionseinheit gesteuert wird.

In einer nicht erfindungsgemässen Ausführungsform wird diese Aufgabe auch gelöst durch ein Verfahren zur Produktion eines Produktes in einer Brauereianlage, aufweisend eine Abfüllung, einen Drucktankkeller, eine Filtration, einen Lagerkeller und ein Sudhaus, wobei das Verfahren die folgenden Schritte aufweist:
a. Erstellen eines Abfüllauftrages für die Abfüllung;
b. Abfüllen einer Menge eines Produktes anhand des Abfüllauftrages, wenn die erforderliche Menge als freigegebenes Produkt im Drucktankkeller vorhanden ist;
c. Überprüfen der Füllmenge eines Produktes im Drucktankkeller und Erstellen eines Filtrationsauftrages für die Filtrationsanlage, wenn die Füllmenge des Vorproduktes im Drucktankkeller eine Mindestfüllmenge unterschreitet;
d. Filtrieren einer Menge eines Vorproduktes anhand des Filtrationsauftrages, wenn die erforderliche Menge als freigegebenes Vorprodukt im Lagerkeller vorhanden ist;
e. Überprüfen der Füllmenge eines Vorproduktes im Lagerkeller und Erstellen eines Sudauftrags für das Sudhaus, wenn die Füllmenge des Vorproduktes im Lagerkeller eine Mindestfüllmenge unterschreitet;
f. Erzeugen einer Menge eines Vorproduktes im Sudhaus anhand des Sudauftrages.

In dieser Ausführungsform wird ein Drucktankkeller mit entsprechenden Drucktanks zur Zwischenspeicherung von fertigem Produkt, z.B. Bier einer bestimmten Sorte, verwendet. Diese erhöht zwar den Lagerbedarf, erhöht aber die Verfügbarkeit eines Produktes zur kurzfristigen Abfüllung.

Bevorzugt weist das Verfahren weiterhin den Schritt des Gärens der vom Sudhaus erzeugten Menge eines Vorproduktes in einem Gärkeller auf.

Bevorzugt weist das Verfahren weiterhin den Schritt des Erzeugens eines Sudauftrags auf, wenn die Menge eines Vorproduktes im Gärkeller eine Mindestmenge unterschreitet.

Bevorzugt weist das Verfahren weiterhin den Schritt des Erzeugens eines Umlagerungsauftrags auf, wenn die Menge eines Vorproduktes im Lagerkeller eine Mindestmenge unterschreitet und ein sogenanntes Zweitankverfahren für die Gärung und Reifung eingesetzt wird.

Bevorzugt weist das Verfahren weiterhin den Schritt einer Qualitätsprüfung des Produktes im Lagerkeller auf, um ein Produkt freizugeben.

Bevorzugt weist das Verfahren weiterhin den Schritt der Bereitstellung mindestens einer Bierverarbeitungseinheit auf, welche direkt ein freigegebenes Produkt aus dem Lagerkeller heraus verarbeitet und an die Abfüllung weiterleitet.

Bevorzugt weist die Bierverarbeitungseinheit einen Tiefkühler, und/oder eine Bierstabilisierungsvorrichtung und/oder eine Filtrationsvorrichtung und /oder eine Kurzzeiterhitzungsanlage auf.

Bevorzugt weist die Brauereianlage mehrere Bierverarbeitungseinheiten und in der Abfüllung mehrere Abfülllinien auf, wobei die Anzahl der Bierverarbeitungseinheiten mindestens um eins größer ist, als die Anzahl der Abfülllinien.

Bevorzugt sind die Bierverarbeitungseinheiten über eine Ventilmatrix mit den Abfülllinien vermischungssicher verschaltet.

Bevorzugt wird, wenn ein neuer Abfüllauftrag für ein Produkt erzeugt wird, in einer Warteschlange für Abfüllaufträge entweder ein bestehender Abfüllauftrag für das entsprechende Produkt um die erforderliche Menge erhöht, oder, wenn kein bestehender Abfüllauftrag für das entsprechende Produkt in der Warteschlage für Abfüllaufträge vorhanden ist, der neue Abfüllauftrag für das Produkt in der Warteschlage für Abfüllaufträge platziert.

Bevorzugt wird, wenn ein neuer Sudauftrag für ein Vorprodukt erzeugt wird, in einer Warteschlange für Sudaufträge entweder ein bestehender Sudauftrag für das entsprechende Vorprodukt um die erforderliche Menge erhöht, oder, wenn kein bestehender Sudauftrag für das entsprechende Vorprodukt in der Warteschlage für Sudaufträge vorhanden ist, der neue Sudauftrag für das Produkt in der Warteschlage für Sudaufträge platziert.

Bevorzugt wird, wenn ein neuer Filtrationsauftrag für ein Produkt erzeugt wird, in einer Warteschlange für Filtrationsaufträge entweder ein bestehender Filtrationsauftrag für das entsprechende Produkt um die erforderliche Menge erhöht, oder wenn kein bestehender Filtrationsauftrag für das entsprechende Produkt in der Warteschlage für Filtrationsaufträge vorhanden ist, der neue Filtrationsauftrag für das Produkt in der Warteschlage für Filtrationsaufträge platziert wird.

Bevorzugt weist das Verfahren weiterhin den Schritt des Einstellens der Produktqualität mittels eines zentralen Dosierbereichs auf.

Bevorzugt wird der Sudauftrag in mindestens einem kontinuierlichen Sudhaus, bevorzugt in einem kontinuierlichen Sudhaus je Biersorte, abgearbeitet. Das "just-in-time" Brauverfahren eignet sich besonders für eine Brauereianlage mit einem kontinuierlichen Sudhaus, in dem das Vorprodukt, in der Regel die Würze, mittels eines kontinuierlichen Prozesses hergestellt wird. Auf diese Weise könnten beispielsweise zwei oder drei sogenannte Mutterbiere hergestellt werden, die dann über die zentrale Dosiereinheit entsprechend eingestellt werden.

Weitere bevorzugte Ausführungsformen ergeben sich aus den Unteransprüchen.

### 4. Kurze Beschreibung der Zeichnungen

In den Figuren sind bevorzugte Ausführungsformen dargestellt. In Ihnen zeigt:
- Fig. 1:: eine schematische Darstellung einer Brauereianlage gemäß einer ersten bevorzugten Ausführungsform;
- Fig. 2:: eine schematische Darstellung einer Brauereianlage gemäß einer zweiten bevorzugten Ausführungsform; und
- Fig. 3:: eine schematische Darstellung eines Teils der Brauereianlage der Fig. 1 und 2.

### 5. Beschreibung bevorzugter Ausführungsformen

Im Folgenden werden bevorzugte Ausführungsformen mit Bezug zu den Figuren beschrieben. Merkmale einzelner Ausführungsformen können mir Merkmalen anderer Ausführungsformen kombiniert werden, auch wenn dies nicht im Detail dargestellt ist.

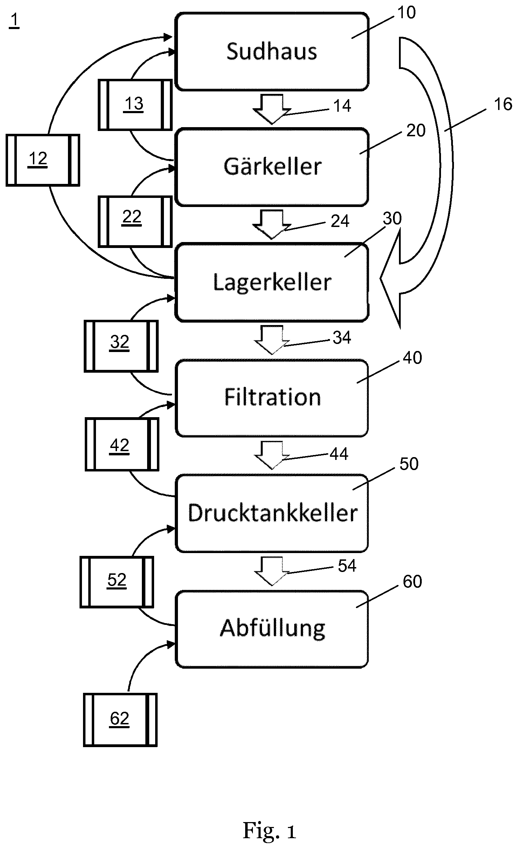

Fig. 1 zeigt eine Brauereianlage 1 aufweisend ein Sudhaus 10, einen Gärkeller 20, einen Lagerkeller 30, eine Filtration 40, einen Drucktankkeller 50 und eine Abfüllung 60. Im Sudhaus 10 wird im Beispiel der Bierherstellung auf z.B. übliche Weise aus Wasser, Malz und Hopfen nach einem bestimmten Rezept die sog. Würze hergestellt, welche ein Vorprodukt 14 des herzustellenden Bieres darstellt.

Das Sudhaus 10 kann ein konventionelles batchweise arbeitendes Sudhaus 10 mit Würzepfanne sein. Alternativ kann das Sudhaus auch ein kontinuierliches Sudhaus sein, in dem die Würze, also ein Vorprodukt, mittels eines kontinuierlichen Prozesses erzeugt wird. Auf diese Weise könnten beispielsweise zwei oder drei sogenannte *"Mutterbiere"* hergestellt werden, die in späteren Verarbeitungsschritten zu den gewünschten Produkten weiterverarbeitet werden.

Zur Gärung wird die Würze 14 in Gärtanks in einem Gärkeller 20 eingeleitet und es wird Bierhefe zugegeben. Bei der Gärung im Gärkeller 20 wird etwa 60 % bis 70 % des Malzzuckers in Alkohol umgesetzt. Nach Ablauf der Gärung im Gärkeller 20 wird das entstandene Jungbier als Vorprodukt 24 in Lagertanks eines Lagerkellers 30 umgepumpt. Dort erfolgt eine Nachgärung und Reifung des Biers. Die Nachgärung kann - je nach Biersorte - zwei Wochen bis drei Monate dauern. Durch die Lagerung erhält das Bier seine Reife und den endgültigen Geschmack. Außerdem setzen sich bei der Lagerung Trübbestandteile ab, womit die darauffolgende Filtration leichter vonstattengeht. Nach der Lagerung des Bieres im Lagerkeller wird es in einer Filtration 40 gefiltert wobei die Trübbestandteile entfernt werden. Dann wir das Bier in Drucktanks eines Drucktankkellers 50 zwischengelagert bis es zum Verkauf in einer Abfüllung 60 auf entsprechende Gebinde abgefüllt wird. Zu den üblichen Gebinden zählen Fässer, Flaschen unterschiedlicher Materialen und Formen und Dosen.

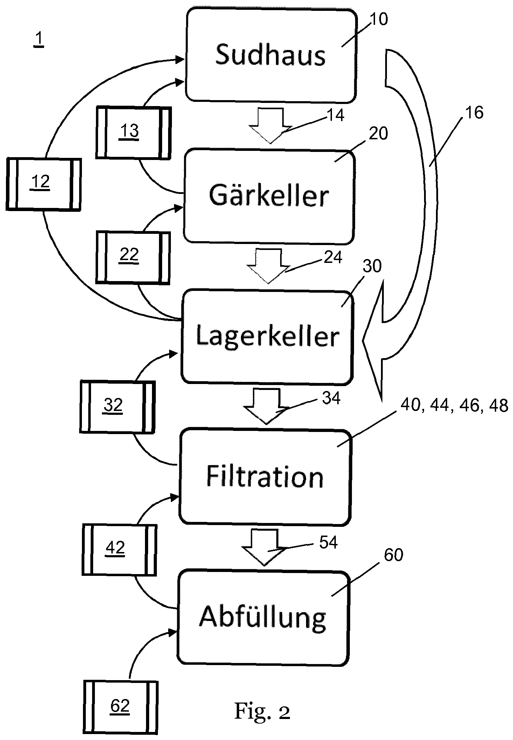

Beim oben beschriebenen Zweitankverfahren wird die Würze 14 vom Sudhaus 10 in den Gärkeller 20 geleitet und nach Ablauf der Gärung das Jungbier in den Lagerkeller 30. Alternativ dazu kann in einem Eintankverfahren die Würze 16 vom Sudhaus 10 direkt in Lagertanks im Lagerkeller 30 geleitet werden, wie dies in Fig. 1 und 2 dargestellt ist. Die Gärung und Lagerung findet im selben Tank statt.

Während der Produktion und insbesondere vor dem Abfüllen des Bieres in der Abfüllung 60 muss das Produkt, also das Bier freigegeben werden. Dies geschieht nach eingehender mikrobiologischer Untersuchung des Bieres. Ein freigegebenes Produkt deutet, dass für eine Produktionseinheit, in der Regel ein voller Tank, die Qualitätsprüfung abgeschlossen ist und das Produkt im Rahmen der branchenüblichen Sorgfalt abgefüllt und in Verkehr gebracht werden kann.

Im bevorzugten Verfahren zur Produktion eines Produktes in einer Brauereianlage läuft die logische Kette bei der Produktionsplanung läuft entgegen dem traditionellen Produktionsprozess. Damit wird ein regelbasiertes technisches Steuerungskonzept bereitgestellt, welches eine "just-in-time" Produktion des Lebensmittels Bier erlaubt.

Bei einer bevorzugten Produktionsplanung einer Brauerei wird durch den Eingang einer Kundenbestellung ein Bedarf gemeldet. Kann dieser Bedarf nicht aus dem Lager bedient werden, wird ein Abfüllauftrag 62 für die Abfüllung 60 ausgelöst. Durch verschiedene logische Abfragen wird dann die Planungskette gestartet:
Sind die erforderlichen Materialen, wie etwa Flaschen, Etiketten, etc., verfügbar und ist die gewünschte Biersorte in der erforderlichen Menge als freigegebenes Produkt im Drucktankkeller 50 vorhanden, kann die nächste freie Abfülllinie 64 diesen Auftrag gemäß des Abfüllauftrages 62 produzieren. Alternativ, falls diese Biersorte gerade für einen früheren Abfüllauftrag 62 produziert wird, wird die Produktionsmenge dieses Abfüllauftrages 62 entsprechend erhöht. Zum Abfüllen wird von der Abfüllung 60 ein Ausleitungsauftrag 52 an den Drucktankkeller 50 weitergeleitet, anhand dessen aus dem Drucktankkeller 50 über entsprechende Rohre und eine entsprechend geschaltete Ventilmatrix das entsprechende Produkt 54 an die Abfüllung 60 geleitet wird.

Erreicht durch Abfüllung die Füllmenge eines Produktes im Drucktankkeller 50 eine definierte Mindestfüllmenge, wird automatisch ein Filtrationsauftrag 42 generiert. Hierzu kann beispielsweise der Füllstand des Produktes im entsprechenden Drucktank des Drucktankkellers 50 überwacht werden. Der Filtrationsauftrag 42 wird an die Filtration weitergeleitet.

Zur Abarbeitung des Filtrationsauftrages 42 werden die Verfügbarkeit der Filtrationsanlage 40, die noch anstehenden Filtrationsaufträge 42, die Verfügbarkeit der Filterhilfsmittel (falls erforderlich) und die Verfügbarkeit von freigegebenen Produkt 34 im Lagerkeller 30 ausgewertet. Entweder wird ein bereits bestehender Filtrationsauftrag 42 in der aktuellen Warteschlange im Volumen entsprechend erhöht oder der neu erzeugte Filtrationsauftrag 42 wird üblicherweise am Ende der Warteschlage der Filtrationsaufträge platziert. Zum Filtrieren wird von der Filtration 40 ein Ausleitungsauftrag 32 an den Lagerkeller 30 weitergeleitet, anhand dessen aus dem Lagerkeller 30 über entsprechende Rohre und eine entsprechend geschaltete Ventilmatrix das entsprechende Vorprodukt 34 an die Filtration 40 geleitet wird.

Erreichen durch Entnahme die Menge von ungefiltertem Vorprodukt in den Lagertanks des Lagerkellers 30 eine definierte Mindestfüllmenge, wird automatisch ein Umlagerungsauftrag 22 für den Inhalt eines freigegebenen Gärtanks 20 in einen Lagertank (beim Zweitankverfahren) und ein Produktionsauftrag 12, 13 für das Sudhaus 10 generiert. Dieser Produktionsauftrag 13 kann von der vorhandenen Menge an benötigtem Vorprodukt im Gärkeller 20 abhängen oder stets zusammen mit dem Umlagerungsauftrag 22 erzeugt werden.

Beim Eintank-Verfahren kann ein Produktionsauftrag, beispielsweis der Art *"1 Gärtank der Sorte XY"* direkt aufgrund der Menge an Vorprodukt im Lagerkeller 30 generiert und an das Sudhaus 10 gemeldet werden.

Beim zeitlichen Ablauf ist zu berücksichtigen, dass auf das Entleeren eines Tanks immer eine automatische Reinigung, bevorzugt durch CIP (=Cleaning In Place) erfolgen muss. Pro Produkt, bzw. Biersorte gibt es eine dieser Biersorte zugeordnete Gruppe von Gärtanks im Gärkeller 20.

Erreicht der Produktionsauftrag12, 13 das Sudhaus 10, wird der Auftrag *"Fülle einen Gärtank mit der Sorte XY'* in der Warteschlange für Produktionsaufträge hinten eingestellt und entsprechend abgearbeitet. Für das Rohstofflager, das beispielsweise Malz, andere Braurohstoffe, Hopfen und Additive bereithält, werden ebenfalls Mindestbestände festgelegt, deren Unterschreitung ihrerseits eine Nachbestellung des entsprechenden Rohstoffs auslösen.

Durch die Verbesserung der Nachweiszeiten bei den mikrobiologischen Untersuchungsmethoden für das Lebensmittel Bier ist es in einer weiteren bevorzugten Ausführungsform technisch möglich, auf einen Drucktankkeller 50 zu verzichten. Diese weitere Ausführungsform ist in der Fig. 2 dargestellt.

Bisher war aufgrund des Zeitbedarfs zwischen einer Probenahme und dem verfügbaren Ergebnis einer mikrobiologischen Untersuchung in der Qualitätsprüfung eine definierte Mindestverweilzeit des fertigen Bieres im Drucktankkeller 50 unabdingbare Voraussetzung. Die verfügbaren modernen Analysemethoden erlauben nun eine "just-in-time"-Filtration und Abfüllung aus dem Lagerkeller 50, Hierbei wird die gewünschte Biersorte wird direkt ("online") aus dem Lagertank im Lagerkeller 50 heraus in einer Bierverarbeitungseinheit ("beer processing unit") 44, 46, 48 oder in einer Filtration 40 abgearbeitet. Eine solche Bierverarbeitungseinheit umfasst bevorzugt einen Tiefkühler, eine Bierstabilisierungsvorrichtung 48, z.B. mit PVPP (Polyvinylpolypyrolydon), einer kieselgurfreien Filtrationsvorrichtung 46 und einen Kurzzeiterhitzungsanlage 44. Die bereits vorhandenen und zur hydraulischen Entkopplung erforderlichen Puffertanks sind für einen störungsfreien Betrieb der Abfüllanlage 60 ausreichend. Die Anzahl der Bierverarbeitungseinheiten wird so gewählt, dass die erforderlichen CIP/SIP-Reinigungsprozeduren keine Unterbrechung der Produktion erfordern.

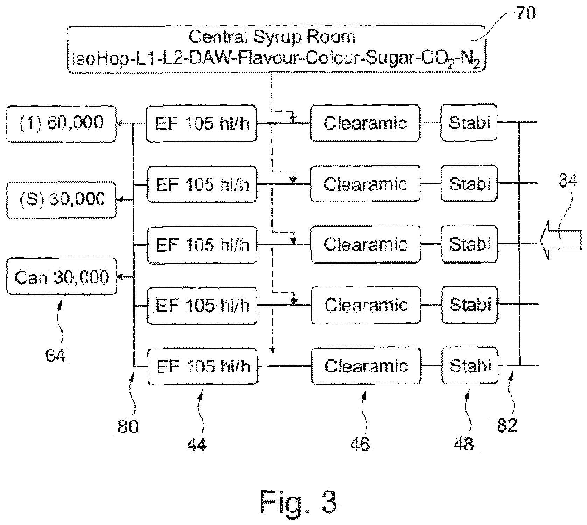

Das vorgeschlagene Verfahren kann bevorzugt dann eingesetzt werden, wenn in der Brauerei aufgrund des Sortenspektrums bereits mehrere Fülllinien 64 bzw. Filterlinien 46 vorhanden sind. Es ist vorteilhaft, Bereiche im Gär- und Lagerkeller 20, 30, eine Filterlinie 46 und eine Abfülllinie 64 zu einer Produktionseinheit für z.B. eine Hauptbiersorte zusammenzufassen. Die Flexibilität solcher Linien kann vorteilhaft durch die Verwendung von Ventilmatrizen 80 erhöht werden. Eine beispielhafte Anordnung einer solchen Brauanlage 1 ohne Drucktankkeller zeigen Fig. 2 und Fig. 3. Bei der Brauereianlage 1 nach Fig. 2 kann auf einen Drucktankkeller verzichtet werden und es wird das Vorprodukt 34 wird direkt in einer Filtration 40 gefiltert bzw. an selber Stelle im Prozess in einer Bierverarbeitungseinheit 44, 46, 48 gefiltert und eingestellt und danach in der Abfüllung 60 direkt abgefüllt.

Die in Fig. 3 dargestellte beispielhafte Anlage mit Bierverarbeitungseinheit 44, 46, 48 verfügt über drei Abfülllinien 64 (60.000 Flasche/h; 30.000 Flaschen/h und 30.000 Dosen/h). Dafür wären nur vier Prozesslinien aus je einem Tiefkühler, einer Bierstabilisierungsvorrichtung 48, einer Filtrationsvorrichtung 46 und einer Kurzzeiterhitzungsanlage 44, mit einer Nettoleistung von 105 hl/h erforderlich. Aufgrund der Standzeit der Filtrationsanlage 46 und der Erfordernis einer regelmäßigen Reinigung ist jedoch eine zusätzliche Prozesslinie 44, 46, 48 vorgesehen. Die Verschaltung der Prozesslinien 44, 46, 48 mit den Abfülllinien 64 erfolgt vor der Abfüllung über eine Ventilmatrix 80. Damit kann von jeder Prozesslinie 44, 46, 48 auf jede Abfülllinie 64 gefahren werden. Durch die Ventilmatrix 80 kann eine vermischungssichere Verschaltung von sich kreuzenden Produktleitungen unter der Verwendung von Doppelsitzventilen, z.B. 6 Befüllströme und 4 Entnahmeströme mit 24 Doppelsitzventilen, vorgenommen werden.

Die im Ausland übliche Definition der Bierqualität wird über einen zentralen Dosierbereich 70 realisiert. Hier werden alle erforderlichen Medien bereitgehalten und in der erforderlichen Genauigkeit dosiert. Diese Medien umfassen beispielsweise Kohlendioxid zur Einstellung des CO₂-Gehaltes im Bier und entgastes Wasser (DAW) zur Einstellung des Stammwürzegehaltes. Darüber hinaus können über den zentralen Dosierbereich 70 noch Farbe und Zucker und andere Stoffe zugegeben werden. Mit Hilfe eines solchen zentralen Dosierbereichs 70 kann aus wenigen Mutterbieren eine Vielzahl von Biersorten oder Biermischgetränken in genau definierter Qualität hergestellt werden.

Über eine weitere Ventilmatrix 82 sind die Prozesslinien 44, 46, 48 mit dem Lagerkeller 30 verbunden. Auch hier kann die Kellerabteilung jeder Biersorte mit jeder Prozesslinie 44, 46, 48 verbunden werden.

Der Vorteil eines solchen Aufbaus liegt darin, dass identische Prozesslinien 44, 46, 48 mit gleicher Konfiguration und gleicher kleiner Leistung verwendet werden können. Die Brauereianlage 1 kann daher nach dem Baukastenprinzip aufgebaut werden.

## Patentansprüche

1. Verfahren zur Produktion eines Produktes in einer Brauereianlage (1) aufweisend eine Abfüllung (60), einen Lagerkeller (30) und ein Sudhaus (10), wobei das Verfahren die folgenden Schritte aufweist:
a. Erstellen eines Abfüllauftrages (62) für die Abfüllung (60);
b. Filtrieren und Abfüllen einer Menge eines Produktes (34, 54) anhand des Abfüllauftrages,(62), wenn die erforderliche Menge als freigegebenes Produkt (34) im Lagerkeller (30) vorhanden ist;
c. Überprüfen der Füllmenge eines Produktes im Lagerkeller (30) und Erstellen eines Sudauftrags (12) für das Sudhaus (10), wenn die Füllmenge des Produktes eine Mindestfüllmenge unterschreitet;
d. Erzeugen einer Menge eines Vorproduktes (14,16) im Sudhaus (10) anhand des Sudauftrages (12).

2. Verfahren gemäß Anspruch 1, weiterhin aufweisend den Schritt des Gärens der vom Sudhaus (10) erzeugten Menge eines Vorproduktes (14) in einem Gärkeller (20).

3. Verfahren gemäß Anspruch 2, weiterhin aufweisend den Schritt des Erzeugens eines Sudauftrags (13), wenn die Menge eines Vorproduktes (24) im Gärkeller (20) eine Mindestmenge unterschreitet.

4. Verfahren gemäß einem der Ansprüche 2 oder 3, weiterhin aufweisend den Schritt des Erzeugens eines Umlagerungsauftrags (22), wenn die Menge eines Vorproduktes im Lagerkeller (30) eine Mindestmenge unterschreitet.

5. Verfahren gemäß einem der Ansprüche 1 - 4, weiterhin aufweisend den Schritt der Qualitätsprüfung des Produktes im Lagerkeller (30), um ein Produkt (34) freizugeben.

6. Verfahren gemäß einem der Ansprüche 1 - 5, weiterhin aufweisend den Schritt der Bereitstellung mindestens einer Bierverarbeitungseinheit (44, 46, 48), welche direkt ein freigegebenes Produkt aus dem Lagerkeller (30) heraus verarbeitet und an die Abfüllung (60) weiterleitet.

7. Verfahren gemäß Anspruch 6, wobei die Bierverarbeitungseinheit (44, 46, 48) aufweist
a. einen Tiefkühler, und/oder
b. eine Bierstabilisierungsvorrichtung (48) und/oder
c. eine Filtrationsvorrichtung (46) und /oder
d. eine Kurzzeiterhitzungsanlage (44).

8. Verfahren gemäß einem der Ansprüche 1 - 7, wobei die Brauereianlage (1) mehrere Bierverarbeitungseinheiten (44, 46, 48) und in der Abfüllung (60) mehrere Abfülllinien (64) aufweist, wobei die Anzahl der Bierverarbeitungseinheiten (44, 46, 48) mindestens um eins größer ist, als die Anzahl der Abfülllinien (64).

9. Verfahren gemäß Anspruch 8, wobei die Bierverarbeitungseinheiten (44, 46, 48) über eine Ventilmatrix (80) mit den Abfülllinien (64) vermischungssicher verschaltet sind.

10. Verfahren gemäß einem der Ansprüche 1 - 9, wobei, wenn ein neuer Abfüllauftrag (62) für ein Produkt (54) erzeugt wird, in einer Warteschlange für Abfüllaufträge entweder
a. ein bestehender Abfüllauftrag (62) für das entsprechende Produkt (54) um die erforderliche Menge erhöht wird, oder
b. wenn kein bestehender Abfüllauftrag (62) für das entsprechende Produkt in der Warteschlage für Abfüllaufträge vorhanden ist, der neue Abfüllauftrag (62) für das Produkt in der Warteschlage für Abfüllaufträge platziert wird.

11. Verfahren gemäß einem der Ansprüche 1 - 10, wobei, wenn ein neuer Sudauftrag (12, 13) für ein Vorprodukt (14,16) erzeugt wird, in einer Warteschlange für Sudaufträge entweder
a. ein bestehender Sudauftrag (12, 13) für das entsprechende Vorprodukt (14,16) um die erforderliche Menge erhöht wird, oder
b. wenn kein bestehender Sudauftrag (12, 13) für das entsprechende Vorprodukt in der Warteschlage für Sudaufträge vorhanden ist, der neue Sudauftrag (12, 13) für das Produkt in der Warteschlage für Sudaufträge platziert wird.

12. Verfahren gemäß einem der Ansprüche 1 - 11, wobei, wenn ein neuer Filtrationsauftrag (42) für ein Produkt (54) erzeugt wird, in einer Warteschlange für Filtrationsaufträge (42) entweder
a. ein bestehender Filtrationsauftrag (42) für das entsprechende Produkt (44) um die erforderliche Menge erhöht wird, oder
b. wenn kein bestehender Filtrationsauftrag (42) für das entsprechende Produkt (44) in der Warteschlage für Filtrationsaufträge vorhanden ist, der neue Filtrationsauftrag (62) für das Produkt (44) in der Warteschlage für Filtrationsaufträge platziert wird.

13. Verfahren gemäß einem der Ansprüche 1 - 12, weiterhin aufweisend den Schritt des Einstellens der Produktqualität mittels eines zentralen Dosierbereichs (70).

14. Verfahren gemäß einem der Ansprüche 1 - 13, wobei der Sudauftrag (12, 13) in mindestens einem kontinuierlichen Sudhaus (10), bevorzugt in einem kontinuierlichen Sudhaus (10) je Biersorte abgearbeitet wird.

## Claims

1. Method for producing a product in a brewery plant (1) comprising a filling plant (60), a storage cellar (30) and a brewhouse (10), the method comprising the following steps:
a. Generating of a filling order (62) for the filling plant (60);
b. Filtering and filling a quantity of a product (34, 54) on the basis of the filling order (62) if the required quantity is available as released product (34) in the storage cellar (30);
c. Checking the filling quantity of a product in the storage cellar (30) and create a brewing order (12) for the brewhouse (10) if the filling quantity of the product falls below a minimum filling quantity;
d. Producing of a quantity of a precursor product (14, 16) in the brewhouse (10) on the basis of the brewing order (12).

2. Method according to claim 1, further comprising the step of fermenting the amount of a precursor product (14) produced by the brewhouse (10) in a fermentation cellar (20).

3. Method according to claim 2, further comprising the step of generating a brewing order (13) if the quantity of a precursor product (24) in the fermentation cellar (20) falls below a minimum quantity.

4. Method according to one of claims 2 or 3, further comprising the step of generating a stock transfer order (22) if the quantity of a precursor product in the storage cellar (30) falls below a minimum quantity.

5. Method according to one of claims 1 - 4, further comprising the step of quality testing the product in the storage cellar (30) to release a product (34).

6. Method according to one of claims 1 - 5, further comprising the step of providing at least one beer processing unit (44, 46, 48) which directly processes a released product from the storage cellar (30) and transfers it to the filling plant (60).

7. Method according to claim 6, wherein the beer processing unit (44, 46, 48) comprises
a. a refrigerator; and/or
b. a beer stabilizing device (48); and/or
c. a filtration device (46) and/or
d. a flash heating facility (44).

8. Method according to one of claims 1 - 7, wherein the brewery plant (1) comprises a plurality of beer processing units (44, 46, 48) and in the filling plant (60) a plurality of filling lines (64), wherein the number of beer processing units (44, 46, 48) is at least one greater than the number of filling lines (64).

9. Method according to claim 8, wherein the beer processing units (44, 46, 48) are connected to the filling lines (64) via a valve matrix (80) in a manner protected against mixing.

10. Method according to one of claims 1 - 9, wherein, if a new filling order (62) for a product (54) is generated, in a queue for filling orders, either
a. an existing filling order (62) for the respective product (54) is increased by the required quantity, or
b. if there is no existing filling order (62) for the respective product in the queue for filling orders, the new filling order (62) for the product is placed in the queue for filling orders.

11. Method according to one of claims 1 - 10, wherein, if a new brewing order (12, 13) for a precursor product (14, 16) is generated, in a queue for brewing orders, either
a. an existing brewing order (12, 13) for the respective precursor product (14, 16) is increased by the required quantity, or
b. if no existing brewing order (12, 13) for the respective precursor product is available in the queue for brewing orders, the new brewing order (12, 13) for the product is placed in the queue for brewing orders.

12. Method according to one of claims 1 - 11 wherein, if a new filtration order (42) is generated for a product (54), in a queue for filtration orders (42), either
a. an existing filtration order (42) for the respective product (44) is increased by the required quantity, or
b. if there is no existing filtration order (42) for the respective product (44) in the queue for filtration orders, the new filtration order (62) for the product (44) is placed in the queue for filtration orders.

13. Method according to one of claims 1 - 12, further comprising the step of adjusting the product quality by means of a central dosing facility (70).

14. Method according to one of claims 1 - 13, wherein the brewing order (12, 13) is processed in at least one continuous brewhouse (10), preferably in one continuous brewhouse (10) for each beer type.

## Revendications

1. Procédé pour la production d'un produit dans une installation de brassage (1), comprenant un espace d'emplissage (60), une cave de garde (30) et une salle de brassage (10), le procédé comprenant les étapes suivantes :
a. établissement d'une commande d'emplissage (62) pour l'espace d'emplissage (60) ;
b. filtration et emplissage d'une quantité d'un produit (34, 54) sur la base de la commande d'emplissage (62) lorsque la quantité nécessaire est présente dans la cave de garde (30) en tant que produit validé (34) ;
c. contrôle de la quantité en stock d'un produit dans la cave de garde (30) et établissement d'une commande de brassage (12) pour la salle de brassage (10) lorsque la quantité en stock du produit est inférieure à une quantité en stock minimale ;
d. fabrication d'une quantité d'un pré-produit (14, 16) dans la salle de brassage (10) sur la base de la commande de brassage (12).

2. Procédé selon la revendication 1, comprenant en outre l'étape de fermentation, dans une cave de fermentation (20), de la quantité d'un pré-produit (14) fabriquée dans la salle de brassage (10).

3. Procédé selon la revendication 2, comprenant en outre l'étape d'établissement d'une commande de brassage (13) lorsque la quantité d'un pré-produit (24) dans la cave de fermentation (20) est inférieure à une quantité minimale.

4. Procédé selon l'une des revendications 2 ou 3, comprenant en outre l'étape d'établissement d'une commande de transfert (22) lorsque la quantité d'un pré-produit dans la cave de garde (30) est inférieure à une quantité minimale.

5. Procédé selon l'une des revendications 1 à 4, comprenant en outre l'étape de contrôle qualité du produit dans la cave de garde (30) pour valider un produit (34).

6. Procédé selon l'une des revendications 1 à 5, comprenant en outre l'étape de mise à disposition d'une unité de traitement de bière (44, 46, 48) qui traite directement le produit validé à partir de la cave de garde (30) et le transmet à l'espace d'emplissage (60).

7. Procédé selon la revendication 6, dans lequel l'unité de traitement de bière (44, 46, 48) comporte
a. un frigorifique, et/ou
b. un dispositif de stabilisation de bière (48) et/ou
c. un dispositif de filtration (46) et/ou
d. une installation de chauffage instantané (44).

8. Procédé selon l'une des revendications 1 à 7, dans lequel l'installation de brassage (1) comporte plusieurs unités de traitement de bière (44, 46, 48) et plusieurs lignes d'emplissage (64) à l'espace d'emplissage (60), le nombre d'unités de traitement de bière (44, 46, 48) étant au moins supérieur d'une unité au nombre de lignes d'emplissage (64).

9. Procédé selon la revendication 8, dans lequel les unités de traitement de bière (44, 46, 48) sont reliées aux lignes d'emplissage (64), de manière étanche aux mélanges, par l'intermédiaire d'une matrice de vannes (80).

10. Procédé selon l'une des revendications 1 à 9, dans lequel, lorsqu'une nouvelle commande d'emplissage (62) pour un produit (54) est établie, dans une file d'attente de commandes d'emplissage :
a. soit une commande d'emplissage en cours (62) pour le produit correspondant (54) est augmentée de la quantité nécessaire,
b. soit, si aucune commande d'emplissage en cours (62) pour le produit correspondant n'est présente dans la file d'attente de commandes d'emplissage, la nouvelle commande d'emplissage (62) pour le produit dans la file d'attente de commandes d'emplissage est établie.

11. Procédé selon l'une des revendications 1 à 10, dans lequel, lorsqu'une nouvelle commande de brassage (12, 13) pour un pré-produit (14, 16) est établie, dans une file d'attente de commandes de brassage :
a. soit une commande de brassage en cours (12, 13) pour le pré-produit correspondant (14,16) est augmentée de la quantité nécessaire,
b. soit, si aucune commande de brassage en cours (12, 13) pour le pré-produit correspondant n'est présente dans la file d'attente de commandes de brassage, la nouvelle commande de brassage (12, 13) pour le produit dans la file d'attente de commandes de brassage est établie.

12. Procédé selon l'une des revendications 1 à 11, dans lequel, lorsqu'une nouvelle commande de filtration (42) pour un produit (54) est établie, dans une file d'attente de commandes de filtration (42) :
a. soit une commande de filtration en cours (42) pour le produit correspondant (44) est augmentée de la quantité nécessaire,
b. soit, lorsqu'aucune commande de filtration en cours (42) pour le produit correspondant (44) n'est présente dans la file d'attente de commandes de filtration, la nouvelle commande de filtration (62) pour le produit (44) dans la file d'attente de commandes de filtration est établie.

13. Procédé selon l'une des revendications 1 à 12, comprenant en outre une étape de réglage de la qualité de produit par un domaine central de dosage (70).

14. Procédé selon l'une des revendications 1 à 13, dans lequel la commande de brassage (12, 13) est traitée dans au moins une salle de brassage en continu (10), préférentiellement dans une salle de brassage en continu (10) pour chaque sorte de bière.
